# EUROPEAN PATENT APPLICATION

(11) **EP 1 274 076 A1**
(43) Date of publication of application: **08.01.2003**
(21) Application number: 02014176.8
(22) Date of filing: 25.06.2002
(51) Int. Cl.: G11B 7/24

(54) **Optical recording medium**

(30) Priority: 28.06.2001 JP 2001196755
(71) Applicant: FUJI PHOTO FILM CO., LTD., Kanagawa-ken (JP)
(72) Inventor: Iwanaga, Hiroshi, c/oFuji Photo Film Co., Ltd., Minami-Ashigara-shi, Kanagawa (JP)
(74) Representative: Klunker . Schmitt-Nilson . Hirsch

(57) **Abstract**

Disclosed is an optical recording medium comprising a recording layer containing ultrafine particles of at least one metal or metallic compound, which particles have an average particle size of 1 nm to 50 nm and are surface-modified with an adsorptive compound, wherein the adsorptive compound is a silane coupling agent. Also disclosed is an optical recording method.

## Description

### FIELD OF THE INVENTION

The present invention relates to an optical recording medium, and further to an optical recording method.

### BACKGROUND OF THE INVENTION

Optical recording materials have been extensively improved to have a higher density. Laser beams having a wavelength of 600 nm or more have hitherto been used, and recording media have also been developed and designed so as to exhibit the optimum performance within this wavelength region. It is well known that a reduction in the wavelength of light to one nth results in an (n x n)-fold increase in the recording density of information. It has therefore been hurried up to put to practical use high-density recording using short-wave lasers having a wavelength of about 400 nm. With such a decrease in wavelength and an improvement in recording density, a requirement of higher density with respect to optical recording media has progressively increased.

As the techniques of using ultrafine particles for these purposes, there are one in which wavelength multiple recording is carried out utilizing the difference in quantum size effect between ultrafine particles different in size, as disclosed in Japanese Patent Laid-Open No. 62239/1993, and an optical recording medium comprising a recording layer in which fine metal particles are dispersed in a chalcogen compound, or a recording layer in which fine composite particles of a noble metal and a chalcogen are dispersed in a dielectric material, provided on a substrate having a fine uneven pattern, as disclosed in Japanese Patent Laid-Open No. 261244/1998. However, these have been formed by the sputtering methods. Thin film formation methods by sputtering have the advantages that films can be formed in a dry atmosphere having a high degree of freedom of film formation, and the like. However, the fine particles for forming the thin layers have the disadvantages that they are difficult to control their size and size distribution, to control the structure of particles, and to be dispersed in binders or dielectric media, resulting in difficulty of improving the discrimination of recorded/non-recorded areas, down sizing of recording regions, stability of recording materials and the like, as compared to fine particles formed by the colloid methods.

As a technique to overcome these disadvantages, Japanese Patent Laid-Open No. 347756/2001 discloses a technique using metal chalcogenide nano-particles which surfaces are modified with an adsorptive compound. However, there are the problems that the use of general low molecular weight compounds having adsorptive groups causes irreversible decomposition of recording media due to evaporation and gasfication in irradiating laser beams, and that the use of general heat-resistant high molecular weight compounds lead to deterioration of dispersion stability or a lowering in a recording signal resulting from a decrease in the density of a recording element.

Further, adhesion between the ultrafine particles constituting a recording layer and adhesion of the ultrafine particles with an adjacent layer are inferior to those in the case where the recording layer is formed by the sputtering method, so that there is fear that it has poor practical durability as an optical recording medium. No countermeasure therefor is specifically described.

Further, a write once-type optical recording medium using ultrafine metal particles which surfaces are modified with an adsorptive compound is disclosed in Japanese Patent Laid-Open No. 79756/2002. However, it has similar problems.

### SUMMARY OF THE INVENTION

In view of the above-mentioned circumstances, an object of the invention is to provide an optical recording medium having high adhesion and durability while making it possible to increase density by forming a recording layer, in which irradiation of a laser beam allows recording, reproduction and erase to be made, through spin coating or web coating of a nano-particle colloid.

Another object of the invention is to provide a recording method thereof.

Other objects and effects of the present invention will become apparent from the following description.

The above-mentioned objects have been achieved by the followings:
1. An optical recording medium comprising a recording layer containing ultrafine particles of at least one metal or metallic compound, which particles have an average particle size of 1 nm to 50 nm and are surface-modified with an adsorptive compound, wherein the adsorptive compound is a silane coupling agent;
2. The optical recording medium according to item 1 above, wherein the silane coupling agent is represented by the following general formula (I): 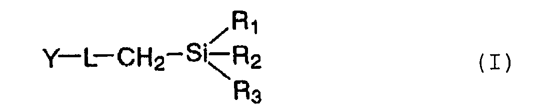 wherein Y represents an adsorptive group (preferably, an -SH group, an -NH₂ group, a -CN group, an -OH group or a -COOH group); L represents a divalent connecting group; and R₁, R₂ and R₃ each represents an alkyl group or an alkoxyl group, at least one of which represents an alkoxyl group;
3. The optical recording medium according to item 1 above, wherein the above-mentioned silane coupling agent is allowed to react after application of the above-mentioned ultrafine particles to bond the particles together and the particles to an adjacent layer by chemical bonds;
4. The optical recording medium according to any one of items 1 to 3 above, wherein the above-mentioned ultrafine particles contain at least one chalcogen atom;
5. The optical recording medium according to any one of items 1 to 4 above, comprising a first dielectric protective layer, the recording layer and a second dielectric protective layer, provided on a substrate in this order; and
6. An optical recording method which comprises conducting recording on an optical recording medium according to any one of items 1 to 5 above with a semiconductor laser beam having an oscillation wavelength ranging from 300 nm to 500 nm.

### DETAILED DESCRIPTION OF THE INVENTION

The silane coupling agent means an organic silicon compound having a functional group chemically bondable to both an inorganic material (glass, silica, metal, clay, etc.) and an organic material (a polymer etc.) which are poorly compatible with each other, and has been utilized in production of magnetic ink and conductive coatings.

The silane coupling agent for use in the invention is preferably one in which at least one of hydrogen atoms of a monosilane is substituted, more preferably one in which one of substituent groups is an organic group containing a carbon atom directly bonded to a silicon atom, and the other is a reactive group, and still more preferably one represented by general formula (I).

As methods utilizing the silane coupling agent in combination with fine inorganic particles, there are shown, for example, a method for producing magnetic ink in Japanese Patent Laid-Open No. 146111/1979, and a method for producing a conductive coating in Japanese Patent Laid-Open No. 239409/1993. However, in either case, a reactive group directly bonded to the silicon atom is bonded to a surface of the fine particle, and a reactive group is utilized for bonding to an organic binder or affinity for an organic solvent.

However, the use method of utilizing a reactive group as the adsorptive group for the fine metal particles and utilizing a reactive group directly bonded to the silicon atom in bonding of the mutual particle units or bonding with adjacent layers, as given in the invention, is a novel approach which has hitherto been unknown.

The silane coupling agent for use in the invention is desirable to be adsorbed by the ultrafine metal or metallic compound particles before spin coating or web coating. It is therefore preferred that the adsorptive group has high affinity for the surface of the metal or metallic compound.

In general formula (I), Y is preferably -SH, -NH₂, -CN, -OH or -COOH, and particularly preferably -SH, -NH₂ or -CN.

L represents a divalent connecting group, which is preferably an alkylene group, alkyleneoxy group or the like. The total number of carbons is preferably from 0 to 10, more preferably from 0 to 5, and particularly preferably from 1 to 3.

Although at least one of R₁, R₂ and R₃ is an alkoxyl group, it is preferred that all of them are alkoxyl groups, particularly preferably methoxy groups. However, since preferred embodiments of the above groups vary depending on the solvent used, the above description is not meant to limit the preferred embodiments.

Examples of the above-mentioned silane coupling agents include 3-aminopropyltrimethylsiloxane, 3-aminopropyltriethoxysilane, N-(2-aminoethyl)-3-aminopropyltrimethoxysilane, 3-mercaptopropylmethyldimethoxysilane, 3-mercaptopropyltrimethoxysilane, vinyltris(2-methoxyethoxy)silane, 3-glycidoxypropyltrimethoxysilane, 3-methacryloxypropyltrimethoxysilane, vinyltriethoxysilane, N-[trimethoxysilylpropyl]ethylenediamine, 2-(3,4-epoxycyclohexyl)ethyltrimethoxysilane, N-(1,3-dimethylbutylidene)-3-(triethoxysilyl)-1-propaneamine, N-[2-(vinylbenzylamino)ethyl]-3-aminopropyltrimethoxysilane hydrochloride, N,N'-bis[3-(trimethoxysilyl)propyl]ethylenediamine and the like.

A dispersing solvent is preferably one homogeneously miscible with water in such an amount of equimolar or more with the reactive group to be added for allowing the silane coupling agent to react. Examples thereof include alcohols such as methanol, ethanol, isopropyl alcohol, ethoxypropanol, diacetone alcohol; esters such as ethyl acetate and cellosolve acetate; ketones such as methyl ethyl ketone and cyclohexanone; fluorine solvents such as 2,2,3,3-tetrafluoropropanpl; glycol ethers such as ethylene glycol monomethyl ether and propylene glycol monomethyl ether; and the like. The dispersing solvents can be used either alone or as a combination of two or more thereof, considering the dispersibilty of the compound. Various additives such as an antioxidant, an UV absorber, a plasticizer and a lubricant may be further added to the dispersion depending on the purpose.

The silane coupling agent is allowed to be adsorbed by the fine metal or metallic compound particle, and then hydrolyzed with water, added to the dispersion, to form a silanol group. This silanol group is condensed by dehydration with a silanol group of the silane coupling agent adsorbed by another adjacent fine particle, thereby forming bonds between the particles. Further, condensation by dehydration with a hydroxyl group of an adjacent layer forms interlayer bonding, thereby enhancing adhesion. Condensation by dehydration is accelerated by concentration resulting from solvent drying after spin coating or web coating. That is to say, when conditions (concentration, temperature, pH, etc.) of the dispersion is proper, a colloidal state can be maintained because of sufficiently low reaction rate just after dispersion preparation, storage and coating, and condensation reaction occurs only in the drying process to make it possible to form bonding.

Although the average particle size of the ultrafine metal or metallic compound particles for use in the invention is from 1 to 50 nm, it is preferably from 1 to 20 nm, more preferably from 1 to 10 nm, and most preferably from 1 to 4 nm. A size of more than 50 nm results in deterioration of recording characteristics. So-called monodisperse particles, which have a narrow particle size distribution, are better in differentiation between a recorded area and a non-recorded area. The monodisperse particles called in the invention have a coefficient of variation of preferably 30% or less, more preferably 20% or less, most preferably 10% or less.

The metal for use in the recording layer of the invention may be a simple substance or an alloy. The alloy may have either a homogeneous structure or an inner shell/outer shell structure. The metal is preferably a Group 8 metal or a Group 1B metal.

Further, the metallic compound is preferably a metal chalcogenide. The chalcogenide is preferably one comprising at least one of the Group 8, Group 1B and Group 2B elements and the Group 3B, 4B and 5B elements of 4 to 6 periods, and at least one of the Group 6B elements. Specifically, they include GeSbTe, AgInSbTe, GeTe, Ag₂Te, AgInTe₂, AgSbTe₂, CuInSe₂, CuInTe₂, AgSbTe, InSbTe, GeTeS, GeSeS, GeSeSb, GeAsSe, InTe, SeTe, SeAs, GeTeAu, GeTeSeSb, GeTeSnAu, GeTePb, GeTeSbS and the like. Particularly preferred are any one of GeSbTe, AgInSbTe, GeTe, Ag₂Te, AgInTe₂, AgSbTe₂, CuInSe₂ and CuInTe₂. Although the atomic ratios are all indicted by integers, they can also be deviated from integral ratios, in order to obtain characteristics such as desired recording characteristics, storage stability and strength.

Methods for producing the ultrafine metal or metallic compound particles can be referred to Japanese Patent Laid-Open Nos. 79756/2002 and 347756/2001.

In the invention, it is preferred that the substrate, the recording layer, a reflective layer and a protective layer are provided in this order. An intermediate layer may be provided between the substrate and the recording layer, between the recording layer and the reflective layer, or between the reflective layer and the protective layer, as needed. Further, the recording layer may be formed of a plurality of layers.

It is desirable that the substrate or an underlayer adjacent to the recording layer in the invention contains a material which can react with the silane coupling agent. Specifically, such materials include inorganic oxides such as SiO₂, TiO₂ and Al₂O₃.

The recording layer or the intermediate layer for use in the invention can contain a conventional organic dye for recording. The organic dye can be decomposed by the transfer of heat absorbed by the ultrafine metal particle recording layer to increase a change in reflectance, thereby providing an optical desk having high modulation degree.

Examples of the organic dyes include cyanine dyes, phthalocyanine dyes and azo metal complex dyes.

Methods for producing the optical recording media of the invention are described below.

Materials for the substrates (including protective substrates) can be arbitrarily selected from various materials used for substrates of conventional optical recording media. The materials for the substrates include, for example, glass; polycarbonates; acrylic resins such as polymethyl methacrylate; vinyl chloride resins such as polyvinyl chloride and vinyl chloride copolymers; epoxy resins; amorphous polyolefins and polyesters; metals; and the like. They may be used in combination as desired. These materials can be used in film form or as rigid substrates. Of the above-mentioned materials, polycarbonates are preferred in terms of moisture resistance, dimensional stability, cost and the like. The substrates generally used have a diameter of 120 ± 3 mm and a thickness of 0.6 ± 0.1 mm, or a diameter of 80 ± 3 mm and a thickness of 0.6 ± 0.1 mm.

The optical recording media of the invention are used for CD-Rs and DVD-Rs. In order to achieve higher recording density, it is possible to use substrates on which pregrooves are formed at a narrower track pitch. In such a case, the track pitch of the substrates is preferably from 0.3 to 0.8 µm, and more preferably from 0.4 to 0.6 µm.

For the purposes of improving planarity, enhancing adhesion and preventing changes in the properties of the recording layer, an undercoat layer may be provided on the substrate surface on which side the recording layer containing the ultrafine metal or metallic compound particles is formed. Materials for the undercoat layer include, for example, polymers such as polymethyl methacrylate, an acrylic acid-methacrylic acid copolymer, a styrene-maleic anhydride copolymer, polyvinyl alcohol, N-methylolacrylamide, a styrene-vinyltoluene copolymer, chlorosulfonated polyethylene, nitrocellulose, polyvinyl chloride, a chlorinated polyolefin, a polyester, a polyimide, a vinyl acetate-vinyl chloride copolymer, an ethylene-vinyl acetate copolymer, polyethylene, polypropylene and polycarbonates; and surface modifiers such as a silane coupling agent. The undercoat layer can be formed by dissolving or dispersing the above-mentioned material in an appropriate solvent to prepare a coating solution, and then applying the coating solution onto the surface of the substrate by a coating method such as spin coating, dip coating or extrusion coating. The thickness of the undercoat layer is generally within the range of 0.005 to 20 µm, and preferably within the range of 0.01 to 10 µm.

On the substrate (or the undercoat layer), concave grooves (pregrooves) having sidewalls with a predetermined tilt angle may be formed. The concave grooves can be formed by using a stamper (die) for resin molding previously processed so as to have sidewalls with a predetermined tilt angle, in forming the substrate by injection molding or extrusion molding. For example, such a stamper can be obtained by adjusting the irradiation conditions (optical adjustment, irradiation power) of a laser beam for processing, thereby processing the stamper so as to give a desired shape, in the production process of the stamper.

Alternatively, the concave grooves may be formed by providing a pregroove layer. As materials for the pregroove layer, there can be used a mixture of: at least one monomer (or oligomer) selected from monoesters, diesters, trimesters and tetraesters of acrylic acid; and a photopolymerization initiator. The pregroove layer can be formed, for example, by first applying a mixed solution comprising the above-mentioned acrylic acid ester and photopolymerization initiator onto a mother die (stamper) precisely manufactured, further placing a substrate on this coating solution layer, thereafter irradiating the coating solution with ultraviolet rays through the substrate or the mother die, thereby hardening the coating layer to securely adhere the substrate to the coating layer, and then separating the substrate from the mother die. Also when providing the pregroove layer, the concave grooves according to the invention can be formed by using a stamper (die) previously processed so as to have a predetermined shape as described above. The thickness of the pregroove layer is generally within the range of 0.05 to 100 µm, and preferably within the range of 0.1 to 50 µm.

Coating methods include spraying, spin coating, dipping, roll coating, blade coating, doctor roll coating, screen printing and the like. The recording layer of the invention is preferably formed by use of the spin coating. The recording layer may be either a monolayer or composed of multiple layers. The thickness of the recording layer of the optical disk of the invention at the concave grooves ranges from 5 to 200 nm (preferably from 10 to 120 nm, more preferably from 15 to 80 nm, and most preferably from 20 to 70 nm). The thickness of the ultrafine metal or metallic compound particle recording layer at land portions ranges preferably from 3 to 180 nm (more preferably 8 to 100 nm, still more preferably from 13 to 70 nm, and most preferably from 15 to 60 nm).

For the purpose of improving the reflectance particularly upon reproducing information, a reflective layer may be provided on the above-mentioned recording layer. Light reflective substances, which are materials for the reflective layer, are substances having high reflectance to laser beams. Examples thereof include metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, semi-metals and stainless steel. Of these, preferred are Cr, Ni, Pt, Cu, Ag, Au, Al and stainless steel. These substances may be used alone, as a combination of two or more of them, or as an alloy. Preferred are Au, Ag and alloys containing these metals. Particularly preferred are Au, Ag and Ag- containing alloys. The reflective layer can be formed on the recording layer by vapor deposition, sputtering or ion plating of the above-mentioned reflective substance. The thickness of the reflective layer is generally within the range of 10 to 500 nm, preferably within the range of 20 to 300 nm, and more preferably within the range of 30 to 150 nm.

The protective layer can be formed, for example, by laminating the reflective layer and/or the substrate with a film, obtained by extrusion processing of a plastic resin, via an adhesive layer. Alternatively, the protective layer may be formed by methods such as vacuum vapor deposition, sputtering and coating. In the case of a thermoplastic resin or a thermosetting resin, the resin is dissolved in an appropriate solvent to prepare a coating solution, which is applied and dried, thereby being able to form the protective layer. In the case of an UV-curing resin, the resin is applied as it is or as a coating solution prepared by dissolving the resin in an appropriate solvent, and cured by irradiation of UV light, thereby being able to form the protective layer. These coating solutions may further contain various additives such as an antistatic agent, an antioxidant and an UV absorber, depending on the purpose. The thickness of the protective layer is preferably from 0.1 to 100 µm (more preferably from 1 to 50 µm, and most preferably from 2 to 20 µm.

For the purpose of protecting the recording layer and/or the reflective layer physically and chemically, a protective layer is preferably provided on the recording layer and/or the reflective layer. This protective layer may be provided also on the substrate surface on which side the recording layer is not formed, for the purpose of enhancing scratch resistance and moisture resistance. Materials used for the protective layer include, for example, inorganic substances such as SiO, SiO₂, MgF₂, SnO₂ and Si₃N₄, and organic substances such as a thermoplastic resin, a thermosetting resin and an UV-curing resin. The protective layer is preferably formed of a resin.

According to the above-mentioned process, the recording medium can be fabricated in which the substrate is provided with the recording layer, and optionally, the intermediate layer, the reflective layer and the protective layer as needed. Two of the resulting recording media can be laminated with each other with an adhesive in the manner that the respective recording layers are positioned inside with respect to the respective substrates, thereby producing an optical recording medium having two recording layers. Further, the resulting recording medium can be laminated with a disk-shaped protective substrate having approximately the same size as that of the substrate of the recording medium, with an adhesive in the manner that the recording layer is positioned inside with respect to the substrate of the recording medium, thereby producing an optical recording medium having a recording layer only on one side thereof. For adhesion, either the UV-curing resin used for forming the protective layer or a synthetic adhesive may be used. An adhesive double coated tape may also be used. The adhesive layer is generally formed to a thickness ranging from 0.1 to 100 µm (preferably from 5 to 80 µm).

It is convenient for management to display a title or a pattern indicating the information recorded on the optical recording medium. For that purpose, a surface of the optical recording medium (a surface opposite to a side which is irradiated with a laser beam for recording and reproduction) is required to be suitable for such indication. In recent years, printing methods using ink jet printers have generally been utilized. When the surface of the optical recording medium is printed using the ink jet printer, the surface of the medium is required to be hydrophilic because ink is aqueous. However, the surface of the optical recording medium is usually hydrophobic. It becomes therefore necessary to improve the surface of the optical information recording medium to be a hydrophilic surface so that the aqueous ink is easily fixed thereto. The optical recording media having such hydrophilic printing surfaces (hydrophilic surface layers) are variously proposed, for example, in Japanese Patent Laid-Open Nos. 169700/1995 and 162438/1998 and the like. The optical recording medium of the invention can also be provided with a hydrophilic surface layer. When the hydrophilic resin surface layer is used, it is advantageous to constitute the surface layer as a layer in which hydrophilic organic polymer particles such as protein particles are dispersed in an UV-curing resin (binder).

The layer under the hydrophilic surface layer (such as the protective layer) is usually transparent, so that luster caused by the metal contained in the reflective layer appears on the surface layer. Printing on the hydrophilic surface layer raises the problem of an unclear printed image or failure to print in a hue of ink itself by disturbance due to the metallic luster. For solving such a problem, it is effective to shield the metallic luster. As methods for shielding the metallic luster, there are known, for example, a method of adding various white or colored, inorganic or organic pigments to the hydrophilic surface layers, and a method of separately providing the under surface of the hydrophilic surface layer with a light shielding layer in which the above-mentioned pigments are dispersed in binders such as UV-curing resins. These methods can also be utilized in the optical information recording media of the invention.

In order to prevent the development of fungi, fungicides may be added to the hydrophilic surface layers as described above. There is no particular limitation on the fungicide. For example, those described in Japanese Patent Laid-Open No. 73429/1991 or 162438/1998 can be used. Typical examples of the fungicides include benzimidazole compounds. When the fungicides are used, the amount thereof used is usually within the range of 0.2 to 2.0 mg per gram of layer.

The method of recording and reproducing information according to the invention is conducted, for example, in the following manner. A laser beam for recording such as a semiconductor laser beam is condensed through an optical system, and the disk is irradiated therewith from the substrate side, while rotating the disk at a predetermined constant linear speed or at a predetermined constant angular speed. The irradiation of the laser beam allows an irradiated portion of the recording layer to absorb the beam to cause a local increase in temperature, which results in physical or chemical changes to alter its optical characteristics, thereby recording information. As the recording light, there is used a laser beam having a wavelength of 300 to 500 nm, which is in the vicinity of visible region. As a short-wave light source for this, a semiconductor laser having an oscillation wavelength ranging from 300 to 500 nm is used. Preferred examples thereof include a blue-purple semiconductor laser having an oscillation wavelength ranging from 380 to 420 nm, and a blue-purple SHG laser in which a near infrared laser beam of 850 nm is converted to a wavelength of 425 nm by an SHG element. Further, it is preferred that the recording light is condensed through an optical system having an NA of 0.55 to 0.95. The minimum recording pit length is usually within the range of 0.05 to 0.7 µm (preferably within the range of 0.1 to 0.6 µm, and more preferably within the range of 0.2 to 0.4 µm). The information recorded as described above can be reproduced by irradiating the recording medium with a semiconductor laser beam having the same wavelength as used in recording from the substrate side, while rotating the disk at a predetermined constant linear speed or at a predetermined constant angular speed, and detecting reflective light thereof.

### EXAMPLES

The present invention will be illustrated in greater detail with reference to the following Examples, but the invention should not be construed as being limited thereto.

### EXAMPLE 1

### 1. Preparation of Ultrafine Metal Particles

### (1) Preparation of Ultrafine Silver Particle Dispersion

One milliliter of AgClO₄ (10 mM) was added at one breath to 99 ml of an ice-cooled aqueous solution containing NaBH₄ (1 mM) and sodium citrate (0.3 mM) with vigorous stirring. After adjustment to pH 5 with citric acid, 1 ml of APS (3-aminopropyltrimethylsiloxane)(0.25 mM) was added, followed by mild stirring at room temperature for 15 minutes. Then, desalting was carried out by repeating three times a process of adding 100 ml of methanol to the reaction solution and then concentrating it to 100 ml by ultrafiltration (fractional molecular weight: 30,000).

Adsorption of APS on particle surfaces was confirmed by the presence of a definite spacing between particles observed under a TEM and by chemical analysis.

### (2) Preparation of Ultrafine Silver Particle Dispersion for Comparison

A dispersion for comparison was prepared in the same manner as described above with the exception that equimolar citric acid was used in place of APS.

It was confirmed under a TEM that the particle size and particle distribution thereof was equivalent to those of (1).

### 2. Preparation of Disk-Shaped Substrate

Using an injection molding machine with a built-in stamper manufactured so as to give a predetermined track pitch and a predetermined groove (pregroove) shape, a disk-shaped resin substrate (120 mm in diameter and 0.6 mm in thickness) made of a polycarbonate (resin trade name: Panlite AD5503, manufactured by Teijin Ltd.) was prepared. The grooves of the resulting resin substrate had a track pitch of 0.5 µm, a depth of 50 nm and a width of 200 nm, and the sidewalls of the grooves had a tilt angle of 60 degrees. These dimensions and angle were measured using an AFM.

### 3. Coating of Ultrafine Metal Particle Dispersion

The coating solution prepared by the method of (1) described above was applied by spin coating onto a surface of the disk-shaped polycarbonate substrate obtained above, on which the pregrooves were formed, and dried to form a recording layer (thickness in grooves: 50 nm, thickness at land portions: 30 nm) .

### 4. Coating of Intermediate Layer

A 1.8-wt% solution of an amorphous fluororesin (trade name: Cytop, manufactured by Asahi Glass Co., Ltd.) was applied onto the recording layer by spin coating, and dried to form a heat insulating layer having a thickness of about 270 nm.

### 5. Formation of Reflective Layer and Protective Layer

Ag was sputtered using a DC magnetron sputtering apparatus (atmosphere in chamber: argon gas, pressure: 0.5 Pa) on the substrate, on which the recording layer and the heat insulating layer had been formed, thereby forming an about 70-nm thick reflective layer composed of Ag. Further, a UV-curing resin (trade name: SD318, manufactured by Dainippon Ink & Chemicals, Inc.) was applied onto the reflective layer by spin coating while changing the number of revolutions from 300 rpm to 4000 rpm. After the coating, the coated resin was irradiated from the upside thereof with ultraviolet rays from a high pressure mercury lamp to cure the resin, thereby forming a protective layer having a thickness of 8 µm. A surface of the protective layer had a hardness of 2H. Thus, a recording medium of Example 1 was obtained in which the recording layer, the heat insulating layer, the reflective layer and the protective layer were provided in this order on the substrate.

### 6. Comparative Examples

### COMPARATIVE EXAMPLE 1

An optical recording medium for comparison (Comparative Example 1) was prepared in the same manner as in Example 1, with the exception that dispersion (2) was used in place of dispersion (1) used in Example 1.

### COMPARATIVE EXAMPLE 2

An optical recording medium for comparison (Comparative Example 2) was prepared in the same manner as in Example 1, except that a recording layer produced by vapor-depositing Ag through sputtering was used in place of the recording layer of the invention in Example 1.

### 7. Evaluation

### (1) Recording Characteristics

With respect to the resulting optical recording media, the following evaluation was carried out. A 8/16 modulating signal was recorded on each optical medium using DDU1000 (manufactured by Pulstec Industrial Co., Ltd.), with a laser beam having a wavelength of 405 nm through a pickup of NA 0.65, at a constant linear speed of 3.5 m/second at an optimum recording power, changing the recording power from 2 mW to 10 mW. Then, the recorded signal was reproduced at a constant linear speed of 3.5 m/second and at a laser power of 0.5 mW to measure the modulation degree. The modulation degree was determined as the ratio of a signal amplitude of a reproduced signal to a reproduced signal output of an unrecorded area.

### (2) Adhesion

An adhesive tape was adhered to the protective layer side, and peeled at one breath. Adhesion was evaluated by whether the recording layer was peeled or not at this time. In order to confirm reproducibility, blank tests (N=10) were carried out.

### (3) Storage stability

After each sample on which a signal was recorded in (1) was stored at 80°C at 85% RH for 72 hours, the recorded signal was reproduced, and modulation degree was measured. The modulation degree thus measured was compared to that before storage.

### 8. Results

**TABLE 1**

| Sample No. | Recording Layer | Modulation Degree/C/N | | Adhesion |
|---|---|---|---|---|
| | | Fresh | After Storage at 80°C at 85% for 72 Hours | |
| 1 (Invention) | Coating of dispersion (1) | 55%/50 dB | 53%/48 dB | OK |
| 2 (Comparison) | Coating of dispersion (2) | 54%/49 dB | Could not be reproduced | Recording layer was peeled |
| 3 (Comparison) | Ag sputtering | Could not be recorded | - | OK |

According to the present invention, a high-density write once-type optical recording medium was obtained in which adhesion was maintained and durability was satisfactory.

### EXAMPLE 2

### 1. Preparation of Ultrafine Metal Chalcogenide Particle Dispersion

### (1) Preparation of Ultrafine AgInTe₂ Particle Dispersion

Two milliliters of an aqueous solution of NaBH₄ (5.29 M) was added to 10 ml of deoxidized water in which Te was suspended (corresponding to 0.2 M) in an atmosphere of an inert gas, followed by mixing by stirring at 70°C for 30 minutes. After the reaction solution was cooled to room temperature, 2 ml of NaBH₄ (5.29 M) was additionally added thereto, and mixed by stirring for 30 minutes to obtain an aqueous Te²⁻ ion solution.

After 83 cc of deoxidized water was added to the resulting solution, 20 mg of sodium citrate was added, and 3 cc of CH₃COOH was further added to inactivate excess NaBH₄ (an aqueous Te²⁻ ion solution).

Then, a solution obtained by mixing 1 ml of silver nitrate (62.5 mM) with 1 ml of indium oxalate (62.5 mM) was added to the aqueous Te²⁻ ion solution with stirring to obtain an AgInTe₂ colloid.

This colloid was diluted with 100 ml of anhydrous methanol, and then 1 ml of MPS (3-mercaptopropyltrimethoxysilane) (6.25 mM) was added, followed by mixing by stirring at room temperature.

With respect to the reaction solution, concentration was repeated three times to 100 ml by ultrafiltration (fractional molecular weight: 30,000) to conduct desalting.

Adsorption of MPS on particle surfaces was confirmed by the presence of a definite spacing between particles observed under a TEM.

### (2) Preparation of Ultrafine AgInTe₂ Particle Dispersion for Comparison

An ultrafine AgInTe₂ particle dispersion for comparison was prepared in the same manner as described above, with the exception that equimolar sodium citrate was added in place of MPS.

### 2. Preparation of Optical Disk

Layers were formed on a polycarbonate substrate having a diameter of 120 mm and a thickness of 0.6 mm in accordance with the layer constitution and formation method shown in Table 2 to produce an optical disk.

The disk completed was initialized at an 808-nm laser output of 1 W, using DDI-1000 (manufactured by Pulstec Industrial Co., Ltd.).

**TABLE 2**

| Sample No. | 1 | 2 | 3 |
|---|---|---|---|
| | Invention | Comparison | Comparison |
| Protective Layer | Coating of UV-curing agent → UV irradiation (200 nm) | | |
| Reflective Layer | Ag sputtering (160 nm) | | |
| Second Dielectric Layer | ZnS/SiO₂ = 3/1 (20 nm) | | |
| Recording Layer | Coating of dispersion (1) (20 nm) | Coating of dispersion (2) (20 nm) | AglnTe₂ sputtering (20 nm) |
| First Dielectric Layer | ZnS/SiO₂ = 3/1 (80 nm) | | |
| PC Substrate | (0.6 mm) | | |

### 3. Comparative Examples

### COMPARATIVE EXANPLE 3

An optical disk was prepared in the same manner as in Example 2, with the exception that dispersion (2) was used in place of dispersion (1) used in the recording layer of the invention in Example 2.

### COMPARATIVE EXAMPLE 4

An optical disk was prepared in the same manner as in Example 2, with the exception that an AgInTe2 film was formed by sputtering in place of the recording layer of the invention in Example 2.

### 4. Evaluation

### (1) Recording Characteristics

Recording characteristics were evaluated using a DDU1000 recording and reproduction evaluating apparatus (manufactured by Pulstec Industrial Co., Ltd.). Using a laser beam having a wavelength of 405 nm and a pickup of NA 0.65, recording was performed at a linear speed of 3.5 m/second, a recording frequency of 4.35 MHz, a duty of 50%, a recording power of 10 mW and an erasure power of 3 mW. Reading was taken at 0.3 mW. A laser beam was incident from the substrate side.

Further, recording characteristics after 1000 cycles of rewriting were evaluated.

### (2) Adhesion

An adhesive tape was adhered to the protective layer side, and peeled at one breath. Adhesion was evaluated by whether the recording layer was peeled or not at this time. In order to confirm reproducibility, blank tests (N=10) were carried out.

### (3) Storage stability

After each sample on which a signal was recorded in (1) was stored at 80°C at 85% RH for 72 hours, the recorded signal was reproduced, and C/N ratio and modulation degree were measured. The C/N ratio and modulation degree thus measured were compared to those before storage.

### 5. Results

**TABLE 3**

| Sample No. | Recording Layer | Modulation Degree/C/N | | | Adhesion |
|---|---|---|---|---|---|
| | | Fresh (one cycle of rewriting) | After 1000 cycles of rewriting | After Storage at 80°C at 85% for 72 Hours (one cycle of rewriting) | |
| 4 (Invention) | Coating of Dispersion (1) | 35%/45dB | 32%/42dB | 33%/4 dB | OK |
| 5 (Comparison) | Coating of dispersion (2) | 34%/44 dB | 6%/7 dB | Could not be reproduced | Recording layer was peeled |
| 6 (Comparison) | AgInTe₂ sputtering | 31%/35 dB | 27%/23 dB | 25%/22 dB | OK |

According to the present invention, a high-density rewriting type optical recording medium significantly improved in adhesion and rewriting resistance, and having good durability could be obtained.

According to the invention, it has become possible to provide an optical recording media having high adhesion and durability compared to conventional ones, while making it possible to increase density by forming the recording layer, in which irradiation of a laser beam allows recording, reproduction or erase to be made, by spin coating or web coating of the nano-particle colloids.

While the invention has been described in detail and with reference to specific examples thereof, it will be apparent to one skilled in the art that various changes and modifications can be made therein without departing from the spirit and scope thereof.

## Claims

1. An optical recording medium comprising a recording layer containing ultrafine particles of at least one metal or metallic compound, which particles have an average particle size of 1 nm to 50 nm and are surface-modified with an adsorptive compound, wherein the adsorptive compound is a silane coupling agent.

2. The optical recording medium according to claim 1, wherein the silane coupling agent is represented by the following general formula (I): 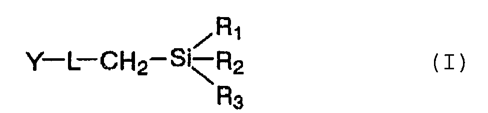 wherein Y represents an adsorptive group; L represents a divalent connecting group; and R₁, R₂ and R₃ each represents an alkyl group or an alkoxyl group, at least one of which represents an alkoxyl group.

3. The optical recording medium according to claim 1, wherein the silane coupling agent is allowed to react after application of the above-mentioned ultrafine particles to bond the particles together and the particles to an adjacent layer by chemical bonds.

4. The optical recording medium according to any one of claims 1 to 3, wherein the above-mentioned ultrafine particles contain at least one chalcogen atom.

5. The optical recording medium according to any one of claims 1 to 4, comprising a first dielectric protective layer, the recording layer and a second dielectric protective layer, provided on a substrate in this order.

6. An optical recording method which comprises conducting recording on an optical recording medium according to any one of claims 1 to 5 above with a semiconductor laser beam having an oscillation wavelength ranging from 300 nm to 500 nm.
